# EUROPEAN PATENT APPLICATION

(11) **EP 1 533 735 A1**
(43) Date of publication of application: **25.05.2005**
(21) Application number: 04256654.7
(22) Date of filing: 28.10.2004
(51) Int. Cl.: G06F 17/60

(54) **Delivery of documents that accompany electronics mails**

(30) Priority: 28.10.2003 US 695266
(71) Applicant: Hewlett-Packard Development Company, L.P., Houston, TX 77070 (US)
(72) Inventor: Flocken, Philip A., Denver, Colorado 80202 (US)
(74) Representative: Powell, Stephen David

(57) **Abstract**

A method of delivering documents (291) that accompanying an electronic mail (164) includes the steps of receiving an electronic mail (264), removing a document attached to the electronic mail (264), providing in the electronic mail a link (299) that leads to a storage location for the document (291), and sending the electronic mail to a recipient. This allows the recipient to receive the electronic mail without the document and, if the recipient wants, to retrieve the document from the storage location at a later time. The link to the storage location may be posted on a web page, with the link of the web page being included in the electronic mail.

## Description

The present invention relates generally to computer systems, and more particularly, but not exclusively, to methods and apparatus for delivering documents that accompany electronic mail ("email") messages.

Email provides a relatively fast, convenient, and cost efficient means of communication between individuals. It is thus no surprise that email has become popular with businesses as well as home users. A user may employ an email client program to compose an email. An email typically includes a body containing a message for immediate viewing by a recipient, and a header containing recipient addresses and a subject line. Documents, such as files, may also accompany an email as attachments. One problem with email attachments is that they increase the size of the email. Some attachments are large enough to slow down the network over which the email is transmitted. Some attachments may also cause the email to exceed a size limit of a receiving email server. Another problem with email attachments is that it is relatively difficult to keep track of attachments sent in a series of emails. From the foregoing, improved techniques for delivering documents that accompany email are generally desirable.

In one embodiment, a method of delivering documents that accompany an electronic mail includes the steps of receiving an electronic mail, removing a document attached to the electronic mail, providing in the electronic mail a link that leads to a storage location for the document, and sending the electronic mail to a recipient. Among other advantages, this allows the recipient to receive the electronic mail without the document and, if the recipient wants, to retrieve the document from the storage location at a later time. The link. to the storage location may be posted on a web page, with the link of the web page being included in the electronic mail.

These and other features of the present invention will be readily apparent to persons of ordinary skill in the art upon reading the entirety of this disclosure, which includes the accompanying drawings and claims.
FIG. 1 shows a schematic diagram of an example computer that may be used in embodiments of the present invention.
FIG. 2 shows a schematic diagram of a computing environment in accordance with an embodiment of the present invention.
FIG. 3 shows a schematic diagram illustrating a technique for delivering documents that accompany emails in accordance with an embodiment of the present invention.
FIG. 4 shows a flow diagram of a method of delivering documents that accompany emails in accordance with an embodiment of the present invention.

The use of the same reference label in different drawings indicates the same or like components.

In the present disclosure, numerous specific details are provided such as examples of apparatus, components, and methods, to provide a thorough understanding of embodiments of the invention. Persons of ordinary skill in the art will recognize, however, that the invention can be practiced without one or more of the specific details. in other instances, well-known details are not shown or described to avoid obscuring aspects of the invention.

Being computer-related, it can be appreciated that the components disclosed herein may be implemented in hardware, software, or a combination of hardware and software (e.g., firmware). Software components may be in the form of computer-readable program code stored in a computer-readable storage medium such as memory, mass storage device, or removable storage device. For example, a computer-readable storage medium may comprise computer-readable program code for performing the function of a particular component. Likewise, computer memory may be configured to include one or more components, which may then be executed by a processor. Components may be implemented separately in multiple modules or together in a single module.

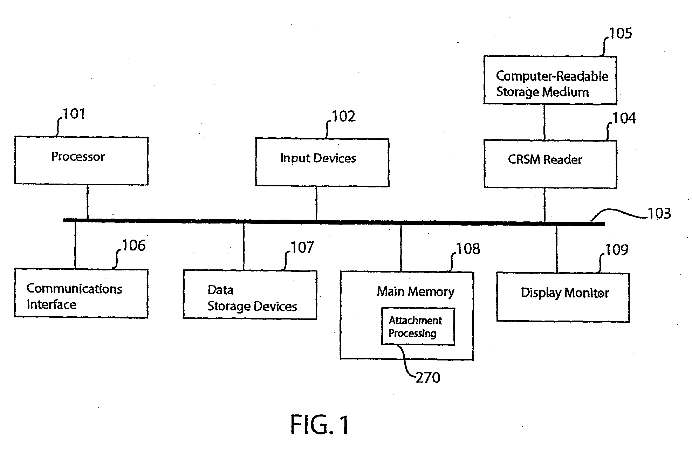

Referring now to FIG. 1, there is shown a schematic diagram of an example computer that may be used in embodiments of the present invention. Depending on its configuration, the computer shown in the example of FIG. 1 may be employed as a client computer or a server computer. The computer of FIG. 1 may have less or more components to meet the needs of a particular application. As shown in FIG. 1, the computer may include a processor 101, such as those from the Intel Corporation or Advanced Micro Devices, for example. The computer may have one or more buses 103 coupling its various components. The computer may include one ore more input devices 102 (e.g., keyboard, mouse), a computer-readable storage medium (CRSM) 105 (e.g., floppy disk, CD-ROM), a CRSM reader 104 (e.g., floppy drive, CD-ROM drive), a display monitor 109 (e.g., cathode ray tube, flat panel display), a communications interface 106 (e.g., network adapter, modem) for coupling to a network, one or more data storage devices 107 (e.g., hard disk drive, optical drive, FLASH memory), and a main memory 108 (e.g., RAM). Software embodiments may be stored in a computer-readable storage medium 105 for reading into a data storage device 107 or main memory 108. In the example of FIG. 1, main memory 108 may be configured to include an attachment processing program 270, which is further discussed below. An attachment processing program 270 may be executed by processor 101.

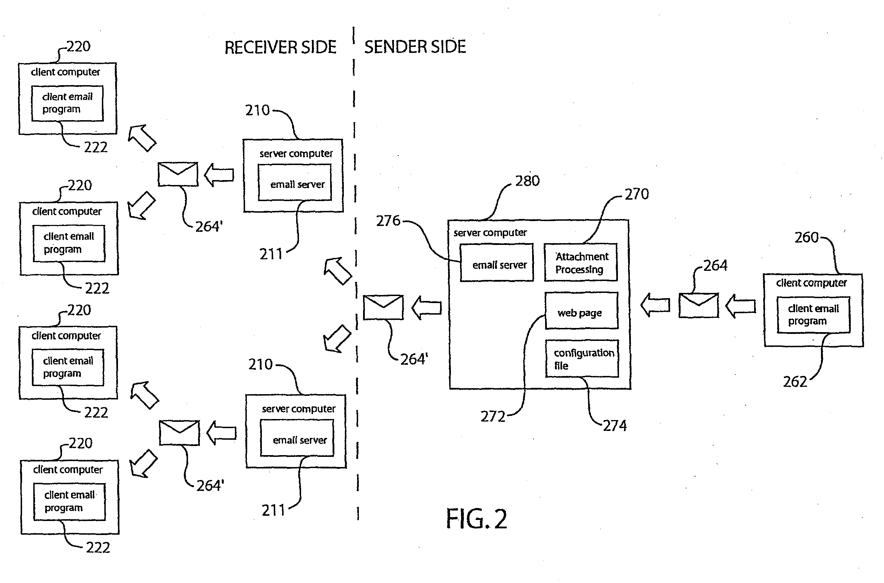

FIG. 2 shows a schematic diagram of a computing environment in accordance with an embodiment of the present invention. In the example of FIG. 2, components associated with sending of emails are in the "sender side," while components associated with receiving of emails are in the "receiver side." The sender side may include one or more server computers 280 and one or more client computers 260. The receiver side may include one or more server computers 210 and one or more client computers 220. The receiver and sender sides may be on separate computer networks or on the same computer network. In one embodiment, the receiver and sender sides are on separate computer networks coupled together via an Intranet or the Internet. Other network components, such as firewalls, routers, gateways, and the like, are not shown for clarity of illustration.

On the sender side, a user on a client computer 260 may employ a client email program 262 to compose an email 264. A client email program 262 may comprise the Microsoft Outlook™ program, for example. An email 264 may be sent from a client computer 260 to a server computer 280 over a computer network, such as a local area network, for example.

In the example of FIG. 2, a server computer 280 is depicted as including an attachment processing program 270, a web page 272, a configuration file 274, and an email server 280. As can be appreciated, the aforementioned components may be implemented in one or several server computers 280. For example, an email server 276 may be on one server computer 280, while an attachment processing program 270, a web page 272, and a configuration file 274 may be on another or separate server computers 280. In one embodiment, a server computer 280 also functions as a web server to allow a computer on the receiver side to access a web page 272 and documents stored in the server computer 280 via an Intranet or the Internet.

An attachment processing program 270 may comprise computer-readable program code for receiving an email 264 and, if applicable, processing one or more documents that may be accompanying the email 264. A document accompanying an email is also referred to as an attachment. In one embodiment, attachment processing program 270 removes a document accompanying an email 264, stores the document on a web server (e.g., a server computer 280), and creates a web page 272 that has a link to the document. Attachment processing program 270 may then reformat the email 264 to include a link to the web page 272, forward the email 264 to an email server 276, which in turn forwards the email 264 to a recipient on the receiver side. The label "264" is appended with a prime (i.e., 264') to indicate an email that has been reformatted by an attachment processing program 270. Thus, the reformatted email transmitted by an email server 276 is referred to as an email 264'.

In the example of FIG. 2, an attachment processing program 270 is depicted as being separate from an email server 276. It is to be noted, however, that an attachment processing program 270 may also be integrated or adapted to directly work with an email server 276 without detracting from the merits of the present invention. In one embodiment, email server 276 comprises a simple mail transfer protocol (SMTP) server.

An email 264' reaches one or more recipients on a client computer 220 by way of a server computer 210. A server computer 210 may include an email server 211, such as an SMTP server, for receiving an email 264' and forwarding it to a client computer 220. A recipient on a client computer 220 may receive an email 264' using a client program 222 (e.g., Microsoft Outlook™ program), activate a link in the email 264' that allows invocation of a web page 272, and then activate a link in the web page 272 that allows downloading of a document that originally accompanied the email 264' before it was processed by an attachment processing program 270. As will be explained further below, embodiments of the present invention also allow for downloading of documents that accompanied previously sent emails.

As can be appreciated, the aforementioned process allows an email to be forwarded to recipients without the originally attached documents. Among other advantages, this minimizes consumption of network bandwidth, gets around problems associated with maximum email sizes in some recipient email servers, and gives recipients the option not to receive attachments. Furthermore, the web page referenced in an email may include not just a link to an attachment of the email, but also links to attachments of previously sent emails. This advantageously allows for organization and management of attachments for a particular project, for example. For example, an individual assigned to maintain a word processing document being edited by a team may periodically send emails containing a link to a web page, which in turn may include links to the word processing document and other versions of the word processing document that accompanied previous emails. Recipients of the email will thus have convenient access to current and previous versions of the word processing document.

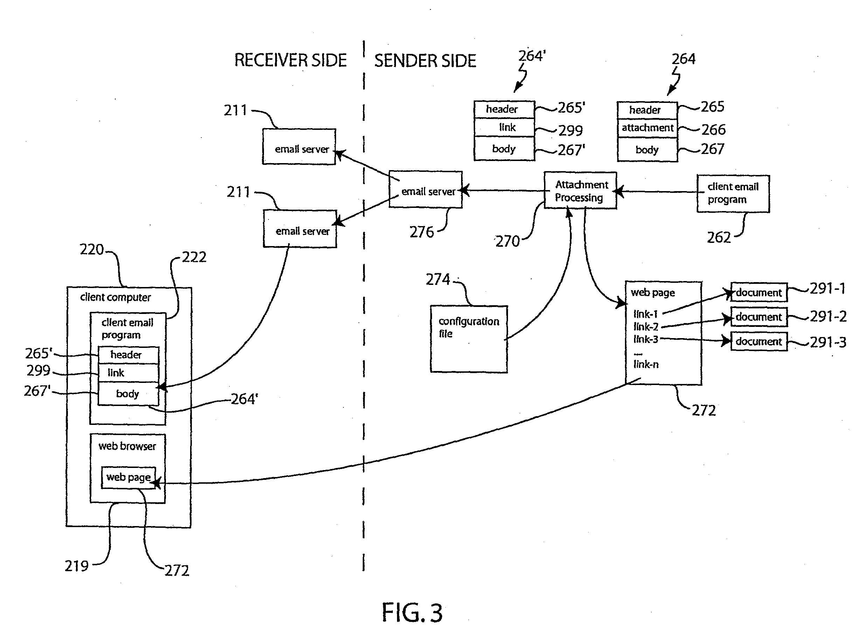

Referring now to FIG. 3, there is shown a schematic diagram illustrating a technique for delivering documents that accompany emails in accordance with an embodiment of the present invention. In the example of FIG. 3, a sender composes an email 264 using a client email program 262. An email 264 may include a header 265, an attachment 266, and a body 267. A header 265 may include addressee fields, such as "To:" and "Cc:" fields, for entering addresses of recipients. A header 265 may also include a subject line where the subject of the email may be indicated. Textual or graphical information for immediate viewing by a recipient may be placed in a body 267. An email 264 may include an attachment 266 comprising one or more documents. Examples of documents that may accompany an email 264 as an attachment 266 include, without limitation, word processing files, application programs, spreadsheets, data files, and the like. Attachments may be included in an email 264 using procedures of the particular client email program.

An email 264 may include a request for attachment processing. An attachment processing program 270 may look for such a request to determine if an email 264 should be forwarded directly to an email server 276 or needs to be processed by the attachment processing program 270. In one embodiment, a sender may include a trigger word in an addressee field of an email 264 to indicate a request for attachment processing. For example, the address of an email server ("e.g., server@attachment_proc.com") may be employed as a trigger word. This allows a sender to enter the address of the email server in a "To:" field of an email 264 to indicate to an attachment processing program 270 that the email 264 needs attachment processing. The provision for including a request for attachment processing advantageously makes the attachment processing relatively transparent to senders, who may or may not want to keep an attachment together with the email. Furthermore, the use of a trigger word to make the request advantageously makes the attachment processing relatively easy to invoke - in this case, email senders can continue to use the email client applications that they are already familiar with, and are not required to learn a new tool.

An attachment processing program 270 receives an email 264, and examines the email 264 for a request for attachment processing. If the attachment processing program 270 finds a request, such as the presence of a trigger word in the email 264, the attachment processing program 270 removes an attached document from the email 264 and stores the document in a storage location. The storage location may be on a server computer 280 that functions as a web server. The web server may have separate directories for documents of different groups of senders or individual senders. Thus, documents attached to emails by a sender in a first group of senders may be stored in a first directory, while documents attached by another sender in a second group of senders may be stored in a second directory. The attachment processing program 270 may consult a configuration file 274 to determine the address of a directory for individuals belonging to particular groups of senders and for individuals not belonging to any group. The documents may be organized according to other guidelines as well. Depending on implementation details, the attachment processing program 270 may first run an authentication sequence to determine if the sender of the email 264 has the appropriate create and modify privileges on the web server before storing the document in the web server. If the sender does not have the appropriate privileges on the web server, the attachment processing program 270 may directly pass the email 264 to an email server 276 without processing the email 264, and remove any trigger word or request indicators from the email 264.

The attachment processing program 270 may open a web page 272, and update the web page 272 with a link to the document removed from the email 264. The attachment processing program 270 may consult a configuration file 274 to determine the location of the web page 272. A locking mechanism, such as the use of a semaphore file or other similar mechanism, may be used to prevent concurrent editing access of the same web page by multiple attachment processing programs or multiple threads of a single attachment processing program. In the case that an attachment processing program cannot edit a web page because it is already locked for editing, a queue or retry mechanism may be used to ensure that the attachment processing program can gain editing access to the web page once it is free for editing. In the example of FIG. 3, each document 291 (i.e., 291-1, 291-2,...) has a corresponding hyperlink in the web page 272. A document 291 may be a document that accompanied a previously sent email 264, which has been processed by the attachment processing program 270. Thus, the web page 272 serves as a directory of attachments of previously sent emails. Each link in the web page 272 may also have a link to or text of a corresponding email 264. Each link in the web page 272 may be a uniform resource locator (URL) to the document, and may also be in graphical form representing the file type (e.g., .doc, .ppt, .xls) of the document. In light of the present disclosure, those of ordinary skill in the art will appreciate that a separate web page may also be created for each email 264 without detracting from the merits of the present invention.

The attachment processing program 270 reformats a processed email 264 into an email 264'. In the example of FIG. 3, an email 264' includes a header 265', a hyperlink 299, and a body 267'. A header 265' may be similar to a header 265 of an email 264 except for a different addressee field, subject line, or both. In one embodiment, an attachment processing program 270 reformats an email 264 to remove any trigger word (e.g., an address of an email server) that may have been used to indicate a request for attachment processing. An attachment processing program 270 may also change the subject line of the email 264 to include a hyperlink to a web page 272.

An attachment processing program 270 may reformat an email 264 to include a link 299. A link 299 may be a hyperlink pointing to the address (e.g., URL) of a web page 272 or the address of a document on a web page for a document hosted on a web server. A link 299 may be in a subject line of an email 264'. A link 299 may also be in a body 267' of an email 264'. Both a link pointing to the address of a web page and a link pointing to the address of a document hosted on the web page may be included in the email body. A body 267' may be similar to a body 267 of an email 264 except for the addition of a link 299.

An email server 276 receives an email 264' and forwards it to one or more email servers 211 based on the addresses of its recipients. An email server 211 receives an email 264', and forwards it to one or more recipients on client computers 220. Once an email 264' is in a client computer 220, a recipient may activate its link 299 (e.g., by clicking with a mouse) to bring up a corresponding web page 272 in a web browser 219. The recipient may then activate a link in the web page 272 to download a document that accompanied the email 264' prior to attachment processing, or documents that accompanied previously sent emails 264' and have links in the web page 272. Alternatively or additionally, a web link in the email body could be activated to directly download the document to the client computer.

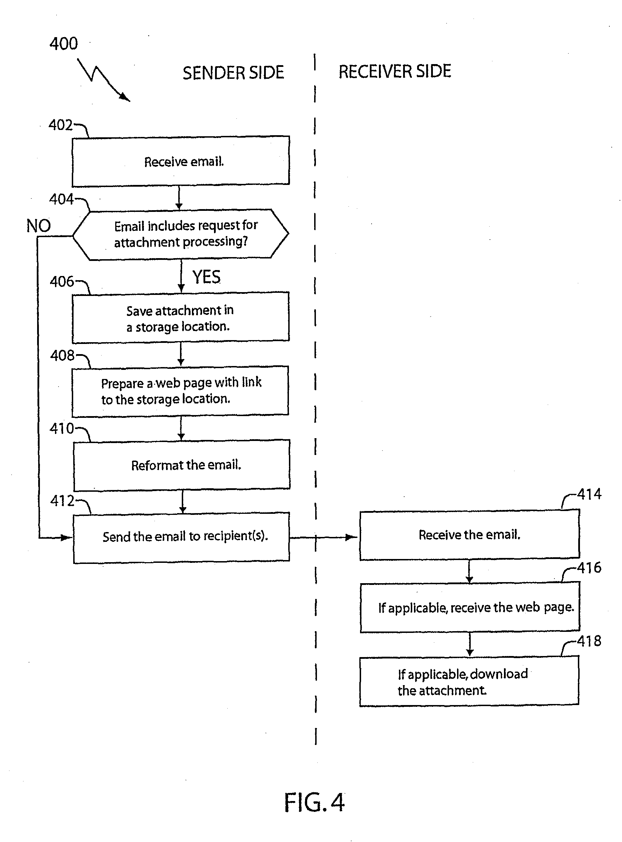

Turning to FIG. 4, there is shown a flow diagram of a method 400 of delivering documents that accompany emails in accordance with an embodiment of the present invention. Beginning in step 402, an email is received by an attachment processing program. The attachment processing program may be integrated with an email server, or be configured as a pre-processor to an email server. In the case where the attachment processing program is integrated with an email server, the attachment processing program may receive the email from an email server, which may have received the email from a client email program. In the case where the attachment processing program is configured as a pre-processor, the attachment processing program may receive the email from a client email program. It is to be noted that the location where an attachment processing program is implemented, whether in front, within, or after an email server, will depend on the application.

In step 404, the attachment processing program determines if the email includes a request for attachment processing. Step 404 may be performed by looking for a designated trigger word in the email, for example. If the email includes a request for attachment processing, method 400 continues in step 406. Otherwise, the email will be sent to its recipients without being processed by the attachment processing program.

In step 406, one or more documents attached to the email are removed from the email and stored in a storage location that is accessible by a web server or other common apparatus. In step 408, a web page with a link to the storage location where the document is stored is prepared, either by creating a new web page or modifying an existing web page, for example. The link on the web page may be named using the text from the email subject line and may include the textual message of the email body to provide further context for the document link as it appears on the web page. In step 408, the email is reformatted to include a link to the web page. For example, the email may be reformatted to include a hyperlink to the URL of the web page and / or the document linked to from the web page. In step 412, the email is sent to its recipients. Note that it is possible for the original email sender to include only the trigger word / address for the attachment processing program and no additional (subsequent) recipients. In this case, the attached document will be posted to the web page but no further notification will be provided. This allows a person to post a document to a web site automatically via an email-based mechanism, without having to notify anyone else at that time.

In step 414, a recipient receives the email. In step 416, the web page is received on the client computer of the recipient by activating the hyperlink to the URL of the web page. In step 418, the document that originally accompanied the email is downloaded to the client computer by activating a link on the web page. Note that steps 416 and 418 may not be applicable if attachment processing was not performed on the email.

As can be appreciated, embodiments of the present invention allow senders to attach documents in emails using the procedures of their particular client email program. This advantageously makes embodiments of the present invention relatively transparent and easy to use. Senders who want to take advantage of attachment processing may so indicate in their email using a convenient additional procedure, such as by entering a trigger word in an addressee field of the email, for example. Another advantage of embodiments of the present invention is that they allow for automatic posting of attachments in a storage location where the attachments can be retrieved at a later time. This is more convenient than having to manually post would be attachments on a web page, then informing recipients to point their web browsers to the web page to download the attachments.

While specific embodiments of the present invention have been provided, it is to be understood that these embodiments are for illustration purposes and not limiting. Many additional embodiments will be apparent to persons of ordinary skill in the art reading this disclosure.

## Claims

1. A method of delivering a document that accompanies an electronic mail, the method comprising:
receiving an electronic mail;
removing a document attached to the electronic mail;
including in the electronic mail a link that leads to a storage location for the document; and
sending the electronic mail to a recipient.

2. The method of claim 1 wherein the storage location is on a web server.

3. The method of claim 1 wherein the link to the storage location comprises a hyperlink included in a web page.

4. The method of claim 3 wherein the web page includes links to documents that accompanied previously sent electronic mails.

5. The method of claim 1 further comprising:
receiving the electronic mail; and
downloading the document by activating the link to the storage location.

6. The method of claim 1 wherein the electronic mail includes a request for attachment processing.

7. The method of claim 6 wherein the request for attachment processing is in an addressee field of the electronic mail.

8. A system for delivering a document that accompanies an electronic mail, the system comprising:
an attachment processing program configured to receive an electronic mail composed in a client computer, to remove a document attached to the electronic mail, to store the document in a storage location, and to reformat the electronic mail to include a link to a web page that includes a link to the storage location; and
an electronic mail server configured to transmit the electronic mail to a recipient indicated in the electronic mail.

9. The system of claim 8 wherein the electronic mail server comprises a simple mail transfer protocol (SMTO) server.

10. The system of claim 8 wherein the attachment processing program is configured to detect if the electronic mail includes a request for attachment processing.
